(19) Europäisches Patentamt European Patent Office Office européen des brevets

(11) **EP 3 645 757 B1**

(12) **EUROPÄISCHE PATENTSCHRIFT**

(45) Veröffentlichungstag und Bekanntmachung des Hinweises auf die Patenterteilung:
**02.06.2021 Patentblatt 2021/22**

(21) Anmeldenummer: **18733832.2**

(22) Anmeldetag: **19.06.2018**

(51) Int Cl.:
*C21D 9/46* *(2006.01)*    *C21D 1/673* *(2006.01)*
*C23C 2/12* *(2006.01)*    *C23C 2/26* *(2006.01)*
*B32B 15/01* *(2006.01)*    *C23C 2/28* *(2006.01)*
*C23C 8/10* *(2006.01)*

(86) Internationale Anmeldenummer:
**PCT/EP2018/066264**

(87) Internationale Veröffentlichungsnummer:
**WO 2019/002026 (03.01.2019 Gazette 2019/01)**

(54) **VERFAHREN ZUM HERSTELLEN EINES MIT EINEM ÜBERZUG VERSEHENEN STAHLBAUTEILS UND STAHLBAUTEIL**

METHOD FOR PRODUCING A STEEL COMPONENT PROVIDED WITH A COATING, AND STEEL COMPONENT

PROCÉDÉ DESTINÉ À FABRIQUER UNE PIÈCE EN ACIER POURVUE D'UN REVÊTEMENT MÉTALLIQUE ET PIÈCE EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2017 DE 102017211076**

(43) Veröffentlichungstag der Anmeldung:
**06.05.2020 Patentblatt 2020/19**

(73) Patentinhaber:
• **ThyssenKrupp Steel Europe AG**
**47166 Duisburg (DE)**
• **thyssenkrupp AG**
**45143 Essen (DE)**

(72) Erfinder:
• **RUTHENBERG, Manuela**
**44143 Dortmund (DE)**
• **KÖYER, Maria**
**44141 Dortmund (DE)**

(74) Vertreter: **ThyssenKrupp Steel Europe AG Patente/Patent Department Kaiser-Wilhelm-Straße 100 47166 Duisburg (DE)**

(56) Entgegenhaltungen:
EP-A1- 1 380 666    EP-A1- 2 242 863
EP-A1- 2 993 248    WO-A1-2010/085983
US-A1- 2011 283 851

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Herstellen eines Stahlbauteils durch Formen eines mit einem Korrosionsschutzüberzug beschichteten Stahlflachprodukts. Des Weiteren betrifft die Erfindung ein Stahlbauteil aus einem mit einem Korrosionsschutzüberzug beschichteten Stahlsubstrat.

Wenn vorliegend von "Stahlflachprodukten" die Rede ist, so sind damit Stahlbänder, Stahlbleche oder daraus gewonnene Platinen und desgleichen gemeint. Unter Platinen werden in der Regel Blechtafeln verstanden, die komplexere Umrisse als die Stahlbänder oder Stahlbleche, aus denen sie hervorgehen, aufweisen können.

Im Karosseriebau werden Stähle eingesetzt, an die hohe Anforderungen hinsichtlich ihrer mechanischen Eigenschaften aber auch hinsichtlich ihres Verarbeitungsverhaltens gestellt werden. Um die Verarbeitung möglichst wirtschaftlich gestalten zu können, sollen die eingesetzten Stähle unter anderem für die Warmumformung geeignet und gut zu schweißen und zu kleben sein. Um den Kundenanforderungen nach einer langen Lebensdauer gerecht zu werden, sollen die in Fahrzeugen eingesetzten Karosserieteile zudem einen hohen Widerstand gegen Korrosion aufweisen. Letztere Eigenschaft kann durch Auftragen einer Korrosionsschutzschicht auf das Stahlsubstrat erreicht werden.

So können im Wesentlichen Zink enthaltende Beschichtungen das Korrosionsverhalten von Stahlkarosserieteilen deutlich verbessern. Allerdings lassen sich mit zinkbasierten Korrosionsschutzüberzügen beschichtete Platinen nur durch eine indirekte Warmumformung verarbeiten, welche einen kostenintensiven Prozess darstellt. Bei der indirekten Warmumformung werden zuerst die Platinen bei Raumtemperatur in einem Werkzeug mit hohen Umformgraden umgeformt und erst anschließend als Bauteil erwärmt. Die Bauteile werden erneut in ein Werkzeug eingelegt, in welchem sie mit geringen Umformgraden in ihre endgültige Form gebracht werden, um den Bauteilverzug der vorangegangenen Behandlung zu korrigieren. Platinen, welche mit einem aluminiumbasierten Korrosionsschutzüberzug beschichtet sind, sind hingegen auch für eine Verarbeitung durch direkte Warmumformung geeignet. Bei der direkten Warmumformung werden die Platinen zunächst in einem Ofen erwärmt und anschließend in einem Werkzeug mit hohen Umformgraden warm umgeformt. Ein erneutes Umformen zur Formkorrektur ist nicht erforderlich, was den Prozess insgesamt verkürzt.

Aus WO 2008/053273 A1 ist ein Verfahren zum Herstellen eines mit einem aluminiumbasierten Korrosionsschutzüberzug versehenen Stahlbauteils bekannt. Dabei wird die umzuformende, mit Aluminium oder einer Aluminiumlegierung beschichtete Platine mit einer Geschwindigkeit von 4 bis 12 °C/s aufgeheizt, für 3 bis 13 Minuten bei Temperaturen von 880 - 940 °C gehalten, anschließend in ein Umformwerkzeug überführt, umgeformt und mit einer Geschwindigkeit von mindestens 30 °C/s abgekühlt. Nach der Umformung weist die Beschichtung des Bauteils einen mehrlagigen Schichtaufbau mit einer Interdiffusionsschicht, einer Zwischenschicht, einer intermetallischen Schicht und einer oberflächigen Schicht auf. Die Interdiffusionsschicht besteht aus 86-95% Fe, 4-10% Al und bis zu 5% Si. Die Zwischenschicht besteht aus 39-47% Fe, 53-61% Al und bis zu 2% Si. Die intermetallische Schicht besteht aus 62-67% Fe, 30-34% Al und 2-6% Si. Die oberflächige Schicht besteht aus 39-47% Fe, 53-61% Al und bis zu 2% Si. Das Bauteil soll eine gute Schweißbarkeit und Rissbeständigkeit aufweisen.

EP 2 993 248 A1 offenbart ein Stahlflachprodukt mit einer aluminiumhaltigen Beschichtung, wobei diese 0,005 bis 0,7 Gew.-% wenigstens eines Alkali- und/oder Erdalkalimetalls enthält, und ein Verfahren zu dessen Herstellung. In diesem Verfahren wird das beschichtete Stahlflachprodukt auf eine Temperatur von 700 bis 900 °C für 360 s, 600 s oder 800 s erhitzt und anschließend umgeformt. Dabei bilden sich siliziumarme und siliziumreiche Schichten in der Beschichtung.

Der Erfindung liegt die Aufgabe zu Grunde, ein verbessertes Verfahren zum Herstellen eines mit einem Korrosionsschutzüberzug versehenen Stahlbauteils zur Verfügung zu stellen. Insbesondere liegt der Erfindung die Aufgabe zu Grunde, ein mit einem Korrosionsschutzüberzug versehenes Stahlbauteil mit guter Schweißbarkeit und guten Klebeeigenschaften zur Verfügung zu stellen.

Hinsichtlich des Verfahrens wird diese Aufgabe durch ein Verfahren mit den in Anspruch 1 angegebenen Merkmalen gelöst. Vorteilhafte und bevorzugte Ausgestaltungen des erfindungsgemäßen Verfahrens sind in den auf Anspruch 1 rückbezogenen Ansprüchen angegeben. Hinsichtlich des Stahlbauteils ist die Aufgabe durch ein Stahlbauteil mit den in Anspruch 11 genannten Merkmalen gelöst. Vorteilhafte und bevorzugte Ausgestaltungen des erfindungsgemäßen Stahlbauteils sind in den auf Anspruch 11 rückbezogenen Ansprüchen angegeben.

Bei einem erfindungsgemäßen Verfahren zum Herstellen eines mit einem Korrosionsschutzüberzug beschichteten Stahlbauteils wird zunächst ein Stahlflachprodukt zur Verfügung gestellt, das mit einem aluminiumbasierten Korrosionsschutzüberzug versehen ist.

Typischerweise kann es sich bei dem für das Stahlsubstrat des Stahlflachprodukts verwendeten Stahlwerkstoff um einen vollberuhigten Stahl folgender Zusammensetzung handeln: 0,10 - 0,25 Gew.-% C, 1,0 - 1,4 Gew.-% Mn, 0,35 - 0,4 Gew.-% Si, bis zu 0,03 Gew.-% P, bis zu 0,01 Gew.-% S, bis zu 0,040 Gew.-% Al, bis zu 0,15 Gew.-% Ti, bis zu 0,1 Gew.-% Nb, bis zu 0,005 Gew.-% B, bis zu 0,5 Gew.-% Cr, bis zu 0,5 Gew.-% Mo, wobei die Summe der Gehalte an Cr und Mo höchstens 0,5 Gew.-% beträgt, Rest Eisen und unvermeidbare Verunreinigungen.

Wenn vorliegend Angaben zu Legierungsgehalten und Zusammensetzungen gemacht werden, beziehen sich diese auf das Gewicht beziehungsweise die Masse, sofern nichts anderes ausdrücklich angegeben ist.

Der aluminiumbasierte Korrosionsschutzüberzug wird mittels konventioneller Beschichtungsverfahren, wie zum Beispiel dem Schmelztauchbeschichten, auf ein Stahlsubstrat, welches beispielsweise ein Stahlblech oder Stahlband sein kann, aufgebracht. Ein für diesen Zweck geeignetes Schmelzbad enthält typischerweise 3-15 Gew.-% Silizium (Si), bevorzugt 9-10 Gew.-% Si, bis zu 3,5 Gew.-% Eisen und Rest Aluminium und unvermeidbare Verunreinigungen. Wenn vorliegend von einem mit einem Korrosionsschutzüberzug beschichteten Stahlflachprodukt oder Stahlbauteil die Rede ist, so ist damit ein mindestens auf einer Seite beschichtetes Stahlflachprodukt oder Stahlbauteil gemeint.

Der auf dem Stahlflachprodukt aufgebrachte aluminiumbasierte Korrosionsschutzüberzug enthält typischerweise 3 - 15 Gew.-% Silizium, bevorzugt 7 - 12 Gew.-% Si, besonders bevorzugt 9 - 10 Gew.-% Si, sowie bis zu 3,5 Gew.-% Eisen (Fe), bevorzugt 1 - 3,5 Gew.-% Fe, besonders bevorzugt 2 - 3,5 Gew.-% Fe, und Rest Aluminium und unvermeidbare Verunreinigungen. Die Dicke des auf dem Stahlflachprodukt aufgebrachten Korrosionsschutzüberzugs beträgt typischerweise 10 - 40 $\mu$m je Seite, das Auflagengewicht beträgt typischerweise 30-100 g/m$^2$ je Seite, bevorzugt 40 - 80 g/m$^2$ je Seite.

Aus dem beschichteten Stahlflachprodukt wird auf konventionelle Weise eine Platine erzeugt, welche einer Wärmebehandlung unterzogen wird. Zur Wärmebehandlung wird die beschichtete Platine der Dicke d für eine Verweildauer t in einen Ofen der Ofenlänge L, welcher eine Ofentemperatur T aufweist, eingelegt. Dabei ist die Verweildauer t die Zeit, die zwischen dem Einlegen der Platine in und dem Austrag der Platine aus dem Ofen vergeht. Unter der Platinendicke d wird dabei die Gesamtdicke der Platine einschließlich des Korrosionsschutzüberzugs, das heißt die Summe aus der Dicke des Stahlsubstrats und des Korrosionsschutzüberzugs verstanden.

Untersuchungen haben ergeben, dass sowohl die Schweißeigenschaften als auch die Klebeeigenschaften durch die Platinendicke d, die Verweildauer t, die Ofenlänge L und die Ofentemperatur T beeinflusst werden. Erfindungsgemäß beträgt deshalb gemäß Gleichung (1) der Quotient Q aus dem Produkt der Ofentemperatur T in °C und der Platinendicke d in mm zum Produkt aus der Verweildauer der Platine im Ofen t in min und der Ofenlänge L in mm mindestens 0,0034 °C/min und höchstens 0,021 °C/min:

$$0{,}0034 \text{ °C/min} \leq Q \leq 0{,}021 \text{ °C/min} \quad (1)$$

mit $Q = (T * d)/(t * L)$, wobei

T = Ofentemperatur in °C,
d = Platinendicke in mm,
t = Verweildauer der Platine im Ofen in min,
L = Ofenlänge in mm

Die erfindungsgemäße Einstellung der Wärmebehandlung gemäß Gleichung (1) ist für die Diffusion des Eisens vom Stahlsubstrat in den Korrosionsschutzüberzug und somit für die Durchlegierung des Korrosionsschutzüberzugs von besonderer Bedeutung. Gleichzeitig ist Q so gewählt, dass die Prozesssicherheit gewährleistet ist, insofern als eine Verflüssigung des Korrosionsschutzüberzugs während der Wärmebehandlung, flüssige Bestandteile während der Umformung im Umformwerkzeug, ein Festkleben des Korrosionsschutzüberzugs an den Ofenrollen sowie ein Anhaften des Korrosionsschutzüberzugs an Transportvorrichtungen und am Umformwerkzeug vermieden werden.

Bei Werten für Q, die kleiner als 0,0034 °C/min sind, stellt sich ein zu hoher Eisenanteil von über 60 Gew.-% in der siliziumarmen Teilschicht A des Korrosionsschutzüberzugs ein, was sich nachteilig auf das Korrosionsschutzverhalten der Beschichtung auswirkt. Vor allem die bei geringeren Q-Werten vorkommenden Eisenanreicherungen an der Oberfläche des Korrosionsschutzüberzugs führen bereits bei geringen korrosiven Belastungen zu Rotrost. Darüber hinaus wurde festgestellt, dass bei Q-Werten von kleiner 0,0034 °C/min eine ausgeprägte Diffusion von Eisen- und Manganatomen aus dem Stahlsubstrat in den Korrosionsschutzüberzug erfolgt, was die Bildung poröser Oxidschichten an der Oberfläche des Korrosionsschutzüberzugs begünstigt. So entstehen mit Mangan- und/oder Eisenoxiden angereicherte Oxidschichten mit einer Dicke größer 250 nm und ausgeprägter Porosität, was die elektrische Leitfähigkeit und damit die Schweißbarkeit beeinträchtigt. Gleichzeitig werden durch eine poröse Oxidschicht an der Oberfläche des Bauteils die Lackhaftung und die Klebehaftung verschlechtert. Letzteres kann bei Belastung zu einem frühzeitigen Versagen führen. Bei Werten für Q, die größer als 0,021 °C/min sind, steigt das Risiko für Anbackungen und Anhaftungen der Oberfläche der beschichteten Platine am Umformwerkzeug, was Beeinträchtigungen der Oberflächenbeschaffenheit des umgeformten Bauteils aber auch zu einem erhöhten Werkzeugverschleiß führt. Darüber hinaus werden bei Werten von Q, die größer als 0,021 °C/min sind, innerhalb des Ofens vermehrt Aluminiumabträge an den Ofenrollen beobachtet, was am fertigen Bauteil lokal zu Unterschreitungen der vom Kunden für die Beschichtung geforderten Mindestdicke führen kann. Zudem wird bei Werten von Q, die größer als 0,021 °C/min sind, die Diffusion von Eisen in die Schicht A nicht ausreichend gefördert, sodass in der Schicht A weniger als 40 Gew.-% Eisen vorhanden ist. Dadurch verschlechtern sich die Schweißeigenschaften des umgeformten Bauteils, weil sich durch den geringeren Eisenanteil der elektrische Widerstand der Schicht A erhöht.

In einer bevorzugten Ausführung wird die Ofentemperatur T so eingestellt, dass sie nicht weniger als 830 °C und nicht mehr als 980 °C beträgt. Bevorzugt sind dabei Ofentemperaturen von höchstens 910 °C, da mit diesen Ofentemperaturen Stahlbauteile mit besonders guten Klebeeigenschaften erzeugt werden können.

In einer weiteren bevorzugten Ausführung beträgt die Verweildauer t der Platine im Ofen mindestens 1 und höchstens 18 Minuten. Typischerweise wird die Platine mit Raumtemperatur in den Ofen eingelegt, sodass die Verweildauer t sowohl eine Aufheizphase als auch eine Haltephase umfassen kann.

Eine Wärmebehandlung bei Ofentemperaturen T von 830 °C bis 980 °C und/oder einer Verweildauer t von 1 bis 18 Minuten hat sich als besonders geeignet zur Behandlung von Stahlsubstraten erwiesen, die 0,10 - 0,25 Gew.-% C, 1,0 - 1,4 Gew.-% Mn und 0,35 - 0,4 Gew.-% Si, bis zu 0,03 Gew.-% P, bis zu 0,01 Gew.-% S, bis zu 0,040 Gew.-% Al, bis zu 0,15 Gew.-% Ti, bis zu 0,1 Gew.-% Nb, bis zu 0,005 Gew.-% B, bis zu 0,5 Gew.-% Cr, bis zu 0,5 Gew.-% Mo, wobei die Summe der Gehalte an Cr und Mo höchstens 0,5 Gew.-% beträgt, Rest Eisen und unvermeidbare Verunreinigungen, enthalten.

Das erfindungsgemäße Verfahren eignet sich insbesondere für Stahlflachprodukte mit einer Dicke von 0,6 - 3,5 mm zur Herstellung von Stahlbauteilen mit einer guten Schweißbarkeit und einer guten Klebehaftung.

Das erfindungsgemäße Verfahren hat sich überraschender Weise für Ofenlängen von 20 - 50 m als besonders geeignet erwiesen. In kürzeren Öfen nimmt das Risiko für ein Abtrennen des Korrosionsschutzüberzugs vom Stahlsubstrat zu. Bei Ofenlängen größer 50 m können vermehrt Verschmutzungen von Ofenrollen auftreten, was die Oberflächenbeschaffenheit nachfolgender Platinen verschlechtert.

Die Wärmebehandlung erfolgt bevorzugt als kontinuierliche Wärmebehandlung in einem Durchlaufofen.

In einer weiteren bevorzugten Ausführung wird die Platine mit einer mittleren Geschwindigkeit vP von mindestens 1,5 m/min und höchstens 25 m/min durch den Ofen bewegt. Bei vP handelt es sich um die mittlere Geschwindigkeit, mit welcher die Platine vom Ofeneingang zum Ofenausgang transportiert wird. Sie wird auch als mittlere Platinengeschwindigkeit bezeichnet.

Mittlere Platinengeschwindigkeiten von 1,5 - 25 m/min haben sich als besonders geeignet bei der Anwendung des erfindungsgemäßen Verfahrens in Öfen von 20-50 m Länge erwiesen.

Wird die Platine mit einer mittleren Geschwindigkeit von mindestens 1,5 m/min durch den Ofen bewegt, so reduziert dies das Risiko von Anhaftungen des Korrosionsschutzüberzugs an den Ofenrollen. Außerdem nimmt bei geringeren mittleren Platinengeschwindigkeiten das Risiko unerwünschter Schichtausbildungen zu, da die Kerntemperatur des Korrosionsschutzüberzugs bereits frühzeitig die Temperatur des Ofens annimmt, wodurch insbesondere die Diffusion von Eisen und Mangan aus dem Stahlsubstrat in die äußeren Lagen des Überzugs verstärkt wird, was die Ausbildung einer erfindungsgemäßen Korrosionsschutzschicht behindert. Auch wird die Ausbildung einer unerwünschten Oxidschicht an der Oberfläche begünstigt, was die Schweißeigenschaften verschlechtert. Zudem diffundiert unerwünscht viel Eisen in den Korrosionsschutzüberzug, was die Wahrscheinlichkeit für Rotrostbildung am fertigen Bauteil erhöht.

Wird die Platine mit einer schnelleren mittleren Geschwindigkeit als 25 m/min durch den Ofen transportiert, nimmt das Risiko für Lackhaftungsschäden zu, weil zu wenig Eisen an die Oberfläche des Korrosionsschutzüberzugs diffundieren kann und sich bei einer dem Lackieren vorangehenden Phosphatierungsbehandlung keine für eine gute Lackhaftung erforderlichen Phosphatkristalle bilden. Insbesondere der Eisengehalt der ersten Si-reichen Schicht $Si_1$ von mindestens 40 Gew.-% ist dann nicht mehr sicher einstellbar. Zudem wird die Prozesssicherheit beeinträchtigt, weil der Korrosionsschutzüberzug im Umformwerkzeug eine zähflüssige Konsistenz aufweisen kann. Darüber hinaus steigt das Risiko der Bildung erhöhter Flüssigphasenanteile des Korrosionsschutzüberzugs im Ofen, was die Verschmutzung der Ofenrollen begünstigt. Dabei ist unter einem erhöhten Flüssigphasenanteil bereits ein Anteil von größer oder gleich 2 Vol.-% Flüssigphase im Korrosionsschutzüberzug zu verstehen. Für Stahlflachprodukte, die für ein Warmumformen mit Presshärten vorgesehen sind, kann je nach Zusammensetzung des Stahlsubstrats bei hohen mittleren Platinengeschwindigkeiten von über 25 m/min nicht gewährleistet werden, dass die Kerntemperatur des Stahlsubstrats über seine gesamte Dicke auf Temperaturen oberhalb der Umwandlungstemperatur Ac3 erwärmt wird, was eine Voraussetzung für eine vollständige Durchhärtung ist.

Es hat sich gezeigt, dass gute Schweißeigenschaften besonders sicher erreicht werden können, wenn die mittlere Platinengeschwindigkeit 2 - 17 m/min beträgt. Dies gilt insbesondere für Platinen mit einer Dicke d kleiner 1,5 mm. Für Platinen mit einer Dicke d von mindestens 1,5 mm haben sich mittlere Platinengeschwindigkeiten von 2 - 8,4 m/min als besonders günstig erwiesen.

In einer besonders bevorzugten Ausführung ist die mittlere Platinengeschwindigkeit vP während des Ofendurchlaufs konstant, um Schwankungen in der Beschaffenheit des Korrosionsschutzüberzugs zu reduzieren.

Nach der Wärmebehandlung wird die Platine aus dem Ofen ausgetragen und danach in ein Umformwerkzeug eingelegt, in welchem die Platine zu einem Stahlbauteil umgeformt wird.

In einer bevorzugten Ausführung wird die Platine im Umformwerkzeug einer Warmumformung unterzogen. Zur Vermeidung größerer Wärmeverluste beträgt die Transferzeit zwischen Ofen und Umformwerkzeug typischerweise höchstens 10 Sekunden.

Optional kann die Platine im Umformwerkzeug während des Umformens mit Abkühlungsgeschwindigkeiten von 20 -1000 K/s, bevorzugt 25 - 500 K/s abgekühlt werden, um beispielsweise das Stahlsubstrat zu härten.

Das so erzeugte Stahlbauteil umfasst ein Stahlsubstrat sowie mindestens auf einer Seite des Stahlsubstrats einen Korrosionsschutzüberzug. Denkbar sind auch Systeme, bei welchen weitere Beschichtungen auf den Korrosionsschutzüberzug aufgetragen werden. In einer bevorzugten Ausführung besteht das erzeugte Stahlbauteil jedoch aus einem Stahlsubstrat und einem mindestens auf einer Seite auf das Stahlsubstrat aufgebrachten Korrosionsschutzüberzug.

Bedingt durch die Wärmebehandlung in Arbeitsschritt b) verändert sich die Zusammensetzung des Korrosionsschutzüberzugs. Der nach der Wärmebehandlung vorliegende Korrosionsschutzüberzug des Stahlbauteils ist durch Diffusion mit insbesondere Eisenatomen angereichert. Eine Anreicherung des Korrosionsschutzüberzugs mit Manganatomen aus dem Stahlsubstrat ist ebenfalls möglich. Darüber hinaus verändert sich erfindungsgemäßer Verfahrensweise die Verteilung von Siliziumatomen im Korrosionsschutzüberzug des Stahlsubstrats, sodass zwischen mehreren Teilschichten unterschiedlicher Zusammensetzung unterschieden werden kann.

Der Korrosionsschutzüberzug des Stahlbauteils weist mindestens vier Teilschichten auf, die von der Oberfläche zum Stahlsubstrat hin betrachtet übereinander liegen:

- eine erste siliziumreiche Schicht Si1, welche neben unvermeidbaren Verunreinigungen mehr als 4 und bis zu 8 Gew.-% Si, 40-70 Gew.-% Fe, bis zu 1 Gew.-% Mn und 30-60 Gew.-% Aluminium enthält, wobei die Summe der vorliegenden Bestandteile 100 Gew.-% beträgt, und welche oberhalb der ersten siliziumarmen Schicht A liegt,
- eine erste siliziumarme Schicht A, welche neben unvermeidbaren Verunreinigungen 1-4 Gew.-% Si, 30-60 Gew.-% Fe, bis zu 1 Gew.-% Mn und 40-60 Gew.-% Aluminium enthält, wobei die Summe der vorliegenden Bestandteile 100 Gew.-% beträgt, und welche zwischen einer ersten siliziumreichen Schicht Si1 und einer zweiten siliziumreichen Schicht Si2 liegt,
- eine zweite siliziumreiche Schicht Si2, welche neben unvermeidbaren Verunreinigungen mehr als 4 Gew.-% und bis zu 8 Gew.-% Si, 40-70 Gew.-% Fe, bis zu 1 Gew.-% Mn und 20-50 Gew.-% Aluminium enthält, wobei die Summe der vorliegenden Bestandteile 100 Gew.-% beträgt, und welche zwischen der ersten siliziumarmen Schicht A und der zweiten siliziumarmen Schicht B liegt,
- eine zweite siliziumarme Schicht B, welche neben unvermeidbaren Verunreinigungen 0,5-4 Gew.-% Si, 40-97 Gew.-% Fe, 0,5-1,5 Gew.-% Mn und 2-40 Gew.-% Aluminium enthält, wobei die Summe der vorliegenden Bestandteile 100 Gew.-% beträgt, und welche an das Stahlsubstrat grenzt.

Gute Schweißeigenschaften des Stahlbauteils werden erhalten, wenn das Verhältnis X der Dicke dB der zweiten siliziumarmen Schicht B in $\mu$m und der Dicke dA der ersten siliziumarmen Schicht A in $\mu$m mindestens 0,4 und höchstens 1,1 beträgt:

$$0,4 \leq X \leq 1,1 \qquad (2)$$

mit $X = dB/dA$, wobei
dB = Dicke der Si-armen Schicht B in $\mu$m und
dA = Dicke der Si-armen Schicht A in $\mu$m.

Überraschender Weise wurde festgestellt, dass auch das Vorhandensein der Si-reichen Schichten Si1 und Si2 einen positiven Einfluss auf die Schweiß- und insbesondere auf die Klebeeigenschaften der erfindungsgemäßen Stahlbauteile hat. Besonders gute Klebeeigenschaften zeigen sich insbesondere bei Korrosionsschutzüberzügen, bei welchen mindestens eine der Si-reichen Schichten einen Si-Gehalt von mindestens 5 Gew.-% aufweist.

Der Fe-Anteil der Teilschicht A beträgt mindestens 30 Gew.-%, bevorzugt mindestens 40 Gew.-%, um eine gute Schweißbarkeit des Korrosionsschutzüberzugs zu gewährleisten.

Der Al-Anteil der Teilschicht B beträgt mindestens 2 und höchstens 40 Gew.-%, um gute Klebeeigenschaften, insbesondere eine gute Klebehaftung, sowie gute Schweißeigenschaften zu gewährleisten. Dies kann besonders sicher erreicht werden, wenn der Al-Anteil der Teilschicht B auf mindestens 5 und höchstens 20 Gew.-% Al begrenzt ist.

In einer weiteren bevorzugten Ausführung weisen die Si-reichen Schichten Si1 und Si2 jeweils einen höheren Eisenanteil auf als die Si-arme Schicht A. Dies wirkt sich positiv auf die Lackanbindung des fertigen Bauteils aus, weil dadurch der dem Lackierprozess typischerweise vorgeschaltete Phosphatierungsprozess gefördert wird.

Oberhalb der ersten Si-reichen Schicht Si1 können weitere Teilschichten des Korrosionsschutzüberzugs vorliegen. So weist der Korrosionsschutzüberzug des Stahlbauteils beispielsweise an seiner Oberfläche eine dünne, mit Silizium- und/oder Aluminiumoxiden angereicherte Schicht auf. Diese äußerste Schicht wird auch als Oxidschicht (Ox) bezeichnet und kann bereits nach dem Beschichtungsprozess und noch vor der Wärmebehandlung in Arbeitsschritt b) in einer Dicke von typischerweise ca. 5 nm vorliegen. Während der Wärmebehandlung, welche vor dem Umformprozess durchgeführt wird, das heißt während Arbeitsschritt b), kann es zu einer Anreicherung der äußersten Schicht mit Silizium- und Aluminiumoxiden kommen. Die Oxidschicht kann durch die Wärmebehandlung auf typischerweise 50 bis 250 nm Dicke anwachsen. Bei erfindungsgemäßer Anwendung des Herstellungsverfahrens beträgt die Dicke der Oxidschicht nach der Wärmebehandlung in Arbeitsschritt b) höchstens 250 nm, bevorzugt höchstens 150 nm. Bei nicht erfindungsgemäßer Anwendung des Herstellungsverfahrens wächst die Oxidschicht auf Dicken größer 250 nm an und enthält neben Silizium- und Aluminiumoxiden auch vermehrt Eisen- und Manganoxide, was zu einer höheren Porosität der Schicht führt. Dickere Oxidschichten sowie mit Eisen- und Manganoxiden durchsetzte Oxidschichten wirken sich nachteilig auf die Schweiß- und Fügeeigenschaften aus.

In einigen Fällen, insbesondere bei Ofentemperaturen T von 880-920 °C und bei Verweilzeiten t der Platine im Ofen von 3-8 Minuten kann es oberhalb der siliziumreichen Schicht Si1 zur Ausbildung einer weiteren siliziumarmen Schicht (C) kommen. Diese enthält neben unvermeidbaren Verunreinigungen bis zu 4 Gew.-% Si, 30-60 Gew.-% Fe, bis zu 1 Gew.-% Mn und 30-60 Gew.-% Aluminium und liegt zwischen der siliziumreichen Schicht Si1 und der äußersten Schicht Ox.

Die Schichtdicken können indirekt mittels Glimmentladungsspektroskopie (GDOES) bestimmt werden. Bei der GDOES werden die Gewichtsprozente der einzelnen Elemente über die Schichtdicke gemessen. Dazu werden Proben geschnitten und mit n-Heptan gereinigt. Die so vorbereiteten Proben werden in ein Glimmentladungsspektroskop eingelegt und über die Schichtdicke mit einer Auflösung von 10 nm vermessen. Mit dieser Methode können die Gewichtsprozente der einzelnen Elemente über die gesamte Dicke des Korrosionsschutzüberzugs vermessen werden. Durch den unterschiedlichen Si-Gehalt der Si-armen Schichten A und B im Vergleich zu den sie umgebenden Si-reichen Schichten Si1 und Si2 können die Grenzen zwischen den Si-armen und den Si-reichen Schichten und damit die Dicken der Si-armen Schichten A und B ermittelt werden. Die Grenze einer Si-armen Schicht zu einer Si-reichen Schicht wird festgelegt, sobald der GDOES-Messverlauf einen Messpunkt mit einem Si-Gehalt über 4 Gew.-% Si anzeigt. Messpunkte mit Werten oberhalb 4 Gew.-% Si werden einer Si-reichen Schicht zugeordnet, Messpunkte mit Werten kleiner oder gleich 4 Gew.-% Si werden einer Si-armen Schicht zugeordnet. Die Messwerte der innerhalb der einzelnen Schichten gemessenen Messpunkte werden je Schicht arithmetisch gemittelt und ergeben so den Gewichtsanteil eines Elementes je Schicht. Die Schichtdicken können prinzipiell auch lichtmikroskopisch bestimmt werden. Dazu werden Querschliffe poliert und mit 3 % Nitallösung geätzt. Unter dem Lichtmikroskop erscheinen Si-reiche Schichten bei Hellfeldbetrachtung und einer Vergrößerung von 1000fach dunkler als Si-arme Schichten.

Typische Dicken der einzelnen Teilschichten, die mittels GDOES gemessen wurden, betragen 3-16 $\mu$m für die Si-arme Schicht A, 2-15 $\mu$m für die Si-arme Schicht B, jeweils 0,5-1,5 $\mu$m für die Si-reichen Schichten Si1 und Si2 und 2-12 $\mu$m für die optionale Si-arme Schicht C.

Im Folgenden wird die Erfindung anhand von Ausführungsbeispielen und Zeichnungen näher erläutert.

Fig. 1 zeigt schematisch den Aufbau einer ersten Ausführungsform eines erfindungsgemäßen Korrosionsschutzüberzugs.

Fig. 2 zeigt schematisch den Aufbau einer zweiten Ausführungsform eines erfindungsgemäßen Korrosionsschutzüberzugs.

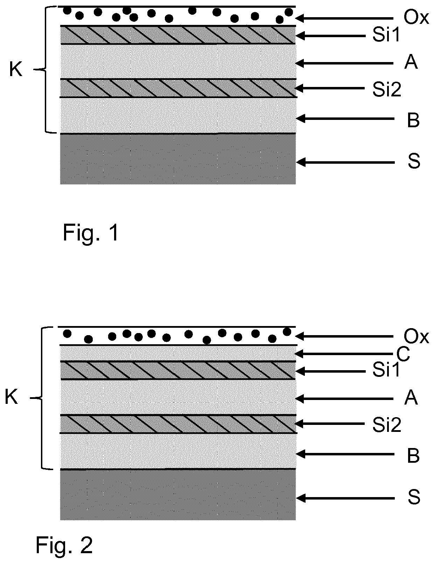

Ein bei erfindungsgemäßer Ausführung des Verfahrens typischer Aufbau der auf dem wärmebehandelten und zum Stahlbauteil umgeformten Stahlflachprodukt aufliegender Korrosionsschutzüberzug und damit auch auf dem umgeformten Stahlbauteil aufliegender Korrosionsschutzüberzug ist in Fig. 1 gezeigt. Bei einer ersten Ausführungsform eines erfindungsgemäßen Korrosionsschutzüberzugs liegt auf dem Stahlsubstrat S der Korrosionsschutzüberzug K auf. Der Korrosionsschutzüberzug K besteht aus fünf Teilschichten: einer mit Oxiden angereicherten Schicht Ox, welche als äußerste Schicht Kontakt zur umgebenden Atmosphäre hat, einer ersten Si-reichen Schicht Si1, welche zwischen der Oxidschicht Ox und einer ersten Si-armen Schicht A liegt, einer ersten Si-armen Schicht A, welche zwischen der ersten Si-reichen Schicht Si1 und einer zweiten Si-reichen Schicht Si2 liegt, einer zweiten Si-reichen Schicht Si2, die zwischen der Schicht A und einer zweiten Si-armen Schicht B liegt und einer zweiten Si-armen Schicht B, welche unterhalb der zweiten Si-reichen Schicht Si2 liegt und direkt auf dem Stahlsubstrat S aufliegt.

Fig. 2 zeigt ebenfalls einen schematischen Aufbau eines erfindungsgemäßen Korrosionsschutzüberzugs, bei welchem zwischen der Oxidschicht Ox und der ersten Si-reichen Schicht Si2 zusätzlich eine weitere Si-arme Schicht C ausgebildet ist.

Zum Nachweis der Wirkung der Erfindung wurden zehn Versuche durchgeführt. Dafür wurden beidseits schmelztauchbeschichtete Stahlbleche mit den in Tabelle 1 angegebenen Zusammensetzungen für das Stahlsubstrat und mit den in Tabelle 2 angegebenen Zusammensetzungen für den Korrosionsschutzüberzug verwendet. Die Korrosionsschutzüberzüge wurden in konventioneller Weise mittels Schmelztauchbeschichten auf die Stahlsubstrate aufgebracht. Es wurden jeweils kaltgewalzte Stahlbänder verwendet, welche nach dem Beschichten zu Stahlblechen abgetafelt wurden. Aus den Stahlblechen wurden Platinen geschnitten, welche unter den in Tabelle 3 angegebenen Bedingungen wärmebehandelt wurden. Nach der Wärmebehandlung wurden die Platinen jeweils aus dem Wärmebehandlungsofen entnommen, binnen 7 s in ein Umformwerkzeug eingelegt und auf konventionelle Weise zu Bauteilen umgeformt.

Nach dem Umformen wurden von den Bauteilen Proben entnommen, an denen die Elementverteilung in den Korrosionsschutzüberzügen mittels Glimmentladungsspektroskopie bestimmt wurde. In Tabelle 4 sind der Schichtaufbau der Korrosionsschutzüberzüge, die Dicken dA und dB der Teilschichten A und B sowie der daraus resultierende Wert X angegeben. Die Gesamtdicken der Korrosionsschutzüberzüge betragen nach der Wärmebehandlung zwischen 20 und 55 μm. Die Proben 1, 2, 4, 5, 9 und 10 weisen einen Schichtaufbau gemäß Fig. 1 auf. In diesen Proben besteht der Korrosionsschutzüberzug jeweils aus einer Oxidschicht Ox, unterhalb derer zunächst eine erste Si-reiche Schicht Si1, dann eine erste Si-arme Schicht A, dann eine zweite Si-reiche Schicht Si2 und dann eine zweite Si-arme Schicht B liegen. Die Proben 3, 6, 7 und 8 weisen einen Schichtaufbau gemäß Fig. 2 auf. In diesen Proben weist der Korrosionsschutzüberzug zwischen der Oxidschicht Ox und der ersten Si-reichen Schicht Si1 eine weitere Si-arme Schicht C auf. Die Zusammensetzungen der nach der Wärmebehandlung resultierenden Teilschichten Si1, Si2, A, B und für die Proben 3, 6, 7, und 8 der Teilschicht C der Korrosionsschutzüberzüge sind in Tabelle 5 angegeben. In allen Proben ist die äußerste Teilschicht des Korrosionsschutzüberzugs eine Oxidschicht. Die Dicken der Oxidschichten betragen dabei zwischen 70 und 135 nm.

Den Bauteilen wurden außerdem Proben zur Prüfung des Schweißverhaltens, Proben zur Prüfung der Klebeeigenschaften und Proben zur Prüfung der Lackanbindung entnommen. Das Schweißverhalten wurde gemäß SEP 1220-2, in der Fassung von Stand 2011, überprüft. Ein gutes Schweißverhalten zeigt sich in Werten für den Schweißbereich, welche mindestens 0,9 kA betragen.

Die Klebeeigenschaften wurden gemäß SEP 1220-6, in der vorläufigen Fassung mit Stand von August 2016, geprüft. Als Klebstoff wurde Betamate 1485 S der Firma DOW Chemical verwendet. Die Proben wurden bis zum Reißen gezogen. Zur Bewertung des Klebeverhaltens wurden die Art der Bruchfläche und die angewendeten Bruchkräfte ausgewertet. Ein gutes Klebeverhalten ist gegeben, wenn die Zugscherfestigkeit mindestens 30 MPa beträgt und die Bruchfläche im Wesentlichen an der Oberfläche des Korrosionsschutzüberzugs verläuft. Ein gutes Klebeverhalten ist insbesondere dann gegeben, wenn mindestens 75 %, insbesondere mindestens 85 % der Bruchfläche innerhalb der an der Oberfläche gelegenen Oxidschicht liegt. Bruchflächenanteile in anderen Teilschichten des Überzugs oder im Klebstoff sind unerwünscht.

Zur Prüfung der Lackanbindung wurde der Gitterschnitt-Kennwert gemäß DIN EN ISO 20567-1B+C bestimmt. Zulässige Gitterschnitt-Kennwerte sind dabei die Werte GT0, GT1 und GT2. Als Maß für eine besonders gute Lackanbindung gelten Gitterschnitt-Kennwerte von GT0 und GT1.

Die Ergebnisse der Untersuchungen zum Schweißverhalten, zum Klebeverhalten und zur Lackanbindung sind in Tabelle 6 angegeben. Aus Tabelle 6 ist ersichtlich, dass alle Proben ein gutes Schweißverhalten mit Schweißbereichen von mindestens 1 kA aufweisen. Die Proben der Klebeprüfung rissen alle im Wesentlichen in der Oxidschicht des Korrosionsschutzüberzugs. So zeigen alle Proben ein gutes Klebeverhalten mit Bruchflächenanteilen in der Oxidschicht von mindestens 75 Flächen-% und Zugscherfestigkeiten von mindestens 30 MPa. Die Lackanbindung ist ebenfalls für alle Proben gut. So zeigen alle Proben Gitterschnitt-Kennwerte von GT0 bis GT2.

Tabelle 1

| Stahl | C | Si | Mn | P | S | Al | Nb | Ti | B |
|-------|-------|------|------|-------|-------|-------|------|-------|-------|
| A | 0,2 | 0,38 | 1,2 | 0,02 | 0,009 | 0,015 | - | 0,05 | 0,005 |
| B | 0,23 | 0,35 | 1,1 | 0,023 | 0,010 | 0,012 | - | 0,045 | 0,004 |
| C | 0,215 | 0,37 | 1,25 | 0,022 | 0,008 | 0,013 | - | 0,047 | 0,005 |
| D | 0,23 | 0,35 | 1,35 | 0,02 | 0,008 | 0,010 | - | 0,04 | 0,004 |
| E | 0,09 | 0,30 | 0,09 | 0,028 | 0,023 | 0,010 | 0,08 | 0,013 | 0,004 |
| Rest Eisen und unvermeidbare Verunreinigungen. Angaben jeweils in Gew.-% | | | | | | | | | |

Tabelle 2

| Überzug | Si | Fe |
|---------|-----|-----|
| Z1 | 9,5 | 3 |
| Z2 | 8 | 3,5 |
| Z3 | 10 | 3 |
| Rest Aluminium und unvermeidbare Verunreinigungen. Angaben in Gew.-% | | |

Tabelle 3

| Versuch Nr. | Stahl | Überzug | Auflagengewicht je Seite [g/m²] | d [mm] | T [°C] | t [min] | L [mm] | Q [°C/min] | vP [m/min] |
|---|---|---|---|---|---|---|---|---|---|
| 1 | A | Z1 | 35 | 0,81 | 920 | 1,7 | 28 | 0,0153 | 16,47 |
| 2 | A | Z3 | 55 | 1,22 | 930 | 3 | 25 | 0,0151 | 8,33 |
| 3 | B | Z2 | 72 | 1,53 | 920 | 3,5 | 30 | 0,0134 | 8,57 |
| 4 | B | Z2 | 70 | 2,85 | 925 | 7 | 30 | 0,0126 | 4,28 |
| 5 | C | Z1 | 80 | 1,02 | 890 | 2,75 | 25 | 0,0132 | 9,09 |
| 6 | C | Z3 | 40 | 1,48 | 910 | 5 | 25 | 0,0108 | 5 |
| 7 | D | Z1 | 73 | 1,12 | 910 | 5,5 | 30 | 0,0062 | 5,45 |
| 8 | E | Z2 | 80 | 1,35 | 920 | 4,5 | 25 | 0,0110 | 5,55 |
| 9 | C | Z1 | 69 | 1,48 | 925 | 6 | 25 | 0,0091 | 4,16 |
| 10 | B | Z1 | 72 | 1,52 | 925 | 3 | 25 | 0,0187 | 8,33 |
| Das Auflagengewicht bezieht sich auf das Auflagengewicht vor der Wärmebehandlung | | | | | | | | | |

Tabelle 4

| Versuch Nr. | Schichtaufbau | dA [μm] | dB [μm] | X |
|---|---|---|---|---|
| 1 | Ox-Si1-A-Si2-B | 9 | 6,6 | 0,73 |
| 2 | Ox-Si1-A-Si2-B | 8,5 | 6 | 0,71 |
| 3 | Ox-C-Si1-A-Si2-B | 14,6 | 10,2 | 0,70 |
| 4 | Ox-Si1-A-Si2-B | 12,6 | 10,8 | 0,86 |
| 5 | Ox-Si1-A-Si2-B | 11,2 | 11,6 | 1,04 |
| 6 | Ox-C-Si1-A-Si2-B | 7 | 5,2 | 0,74 |
| 7 | Ox-C-Si1-A-Si2-B | 14,4 | 11 | 0,76 |
| 8 | Ox-C-Si1-A-Si2-B | 15,8 | 8,6 | 0,54 |
| 9 | Ox-Si1-A-Si2-B | 13,1 | 11,2 | 0,85 |
| 10 | Ox-Si1-A-Si2-B | 7,9 | 8,1 | 1,03 |

EP 3 645 757 B1

| Versuch Nr. | Teilschicht Si1 | | | | Teilschicht Si2 | | | | Teilschicht A | | | | Teilschicht B | | | | Teilschicht C | | | |
|---|---|---|---|---|---|---|---|---|---|---|---|---|---|---|---|---|---|---|---|---|
| | Si | Al | Fe | Mn | Si | Al | Fe | Mn | Si | Al | Fe | Mn | Si | Al | Fe | Mn | Si | Al | Fe | Mn |
| 1 | 4,8 | 40 | 54 | 0,4 | 5,5 | 33 | 60 | 0,8 | 2,5 | 50 | 46 | 0,5 | 3 | 11 | 84 | 1,1 | - | - | - | - |
| 2 | 6,6 | 35 | 57 | 0,8 | 6,2 | 29 | 63 | 0,8 | 3 | 46 | 50 | 0,5 | 2,8 | 9 | 86 | 1,2 | - | - | - | - |
| 3 | 4 | 32 | 63 | 0,7 | 4,3 | 21 | 73 | 0,7 | 1,8 | 40 | 57 | 0,6 | 2,1 | 10 | 86 | 0,9 | 1,5 | 46 | 50 | 0,5 |
| 4 | 5,4 | 44 | 49 | 0,6 | 5,8 | 31 | 62 | 0,7 | 3,1 | 50 | 46 | 0,4 | 3,3 | 12 | 83 | 1,1 | - | - | - | - |
| 5 | 6,3 | 36 | 56 | 0,7 | 5,7 | 25 | 68 | 0,8 | 2,6 | 47 | 49 | 0,5 | 2,8 | 7 | 89 | 1,05 | - | - | - | - |
| 6 | 5 | 45 | 49 | 0,6 | 6,3 | 31 | 61 | 0,7 | 2,4 | 53 | 44 | 0,4 | 3,1 | 12 | 83 | 1 | 4,0 | 46 | 49 | 0,5 |
| 7 | 6 | 40 | 53 | 0,8 | 5,8 | 29 | 64 | 0,7 | 3,5 | 47 | 48 | 0,5 | 2,9 | 9,5 | 86 | 1,1 | 4,0 | 43 | 52 | 0,7 |
| 8 | 6,7 | 43 | 49 | 0,8 | 5,9 | 34 | 59 | 0,9 | 3,5 | 50 | 45 | 0,5 | 3,0 | 10 | 85 | 1,1 | 4,0 | 47 | 48 | 0,8 |
| 9 | 5,4 | 45 | 48 | 0,7 | 5,4 | 35 | 58 | 0,7 | 3,1 | 48 | 48 | 0,4 | 3,3 | 20 | 75 | 1,1 | - | - | - | - |
| 10 | 6,5 | 48 | 44 | 0,6 | 5,7 | 48 | 45 | 0,9 | 3,4 | 50 | 45 | 0,6 | 3,1 | 11 | 84 | 1,0 | - | - | - | - |

Angaben jeweils in Gew.-%. Rest unvermeidbare Verunreinigungen.

Tabelle 5

Tabelle 6

| Versuch Nr. | Schweißbereich [kA] | Bruchflächenanteil (Bruchfläche an der Oberfläche) [Flächen-%]) | Zugscherfestigkeit [MPa] | Gitterschnitt Kennwert |
|---|---|---|---|---|
| 1 | 1,0 | 78 | 34 | GT 1 |
| 2 | 1,1 | 85 | 36 | GT 0 |
| 3 | 1,1 | 75 | 32 | GT 0 |
| 4 | 1,2 | 75 | 31 | GT 1 |
| 5 | 1,0 | 87 | 41 | GT 1 |
| 6 | 1,1 | 80 | 40 | GT 0 |
| 7 | 1,1 | 85 | 43 | GT 0 |
| 8 | 1,3 | 79 | 37 | GT 0 |
| 9 | 0,9 | 75 | 30 | GT 1 |
| 10 | 1,0 | 78 | 32 | GT 2 |

**Patentansprüche**

1. Verfahren zum Herstellen eines mit einem Korrosionsschutzüberzug beschichteten Stahlbauteils, umfassend folgende Arbeitsschritte:

   a) Zurverfügungstellen eines mit einem aluminiumbasierten Korrosionsschutzüberzug beschichteten Stahlflachprodukts,
   b) Wärmebehandeln einer aus dem beschichteten Stahlflachprodukt gebildeten Platine in einem Ofen, wobei gilt:

$$0,0034\ °C/min \leq Q \leq 0,021\ °C/min$$

   mit $Q = (T * d)/(t * L)$, wobei

   $T$ = Ofentemperatur in °C,
   $d$ = Platinendicke in mm,
   $t$ = Verweildauer der Platine im Ofen in min,
   $L$ = Ofenlänge in mm

   c) Umformen der Platine in einem Umformwerkzeug zu einem Stahlbauteil.

2. Verfahren nach Anspruch 1 **dadurch gekennzeichnet, dass** die Temperatur T des Ofens mindestens 830 °C und höchstens 980 °C beträgt.

3. Verfahren nach Anspruch 1 oder 2 **dadurch gekennzeichnet, dass** die Platine während des Arbeitsschritts b) mit einer mittleren Geschwindigkeit (vP) von mindestens 1,5 m/min und höchstens 25 m/min durch den Ofen bewegt wird.

4. Verfahren nach einem der voranstehenden Ansprüche **dadurch gekennzeichnet, dass** die Verweildauer t der Platine im Ofen mindestens 1 min und höchstens 18 min beträgt.

5. Verfahren nach einem der voranstehenden Ansprüche **dadurch gekennzeichnet, dass** der aluminiumbasierte Korrosionsschutzüberzug 3 - 15 Gew.-% Silizium, bis zu 3,5 Gew.-% Eisen, Rest Aluminium und unvermeidbare Verunreinigungen enthält.

6. Verfahren nach einem der voranstehenden Ansprüche **dadurch gekennzeichnet, dass** der Si-Gehalt des aluminiumbasierten Korrosionsschutzüberzugs 7 - 12 Gew.-% beträgt.

7. Verfahren nach einem der voranstehenden Ansprüche **dadurch gekennzeichnet, dass** der Si-Gehalt des aluminiumbasierten Korrosionsschutzüberzugs 9 - 10 Gew.-% beträgt.

8. Verfahren nach einem der voranstehenden Ansprüche **dadurch gekennzeichnet, dass** der Fe-Gehalt des aluminiumbasierten Korrosionsschutzüberzugs 1 - 3,5 Gew.-% beträgt.

9. Verfahren nach einem der voranstehenden Ansprüche **dadurch gekennzeichnet, dass** der Fe-Gehalt des aluminiumbasierten Korrosionsschutzüberzugs 2 - 3,5 Gew.-% beträgt.

10. Verfahren nach einem der voranstehenden Ansprüche **dadurch gekennzeichnet, dass** die Platine in Arbeitsschritt c) im Formwerkzeug mit einer Abkühlungsgeschwindigkeit (CR) von mindestens 20 K/s und höchstens 1000 K/s abgekühlt wird.

11. Stahlbauteil umfassend ein Stahlsubstrat und einen mindestens auf einer Seite des Stahlsubstrats vorhandenen Korrosionsschutzüberzug, **dadurch gekennzeichnet, dass** der Korrosionsschutzüberzug mindestens umfasst:

   - eine erste siliziumreiche Schicht (Si1), welche neben unvermeidbaren Verunreinigungen mehr als 4 und bis zu 8 Gew.-% Si, 40 - 70 Gew.-% Fe, bis zu 1 Gew.-% Mn und 30 - 60 Gew.-% Aluminium enthält, wobei die Summe der vorliegenden Bestandteile 100 Gew.-% beträgt, und welche oberhalb der ersten siliziumarmen Schicht (A) liegt,
   - eine erste siliziumarme Schicht (A), welche neben unvermeidbaren Verunreinigungen 1 - 4 Gew.-% Si, 30 - 60 Gew.-% Fe, bis zu 1 Gew.-% Mn und 40 - 60 Gew.-% Aluminium enthält, wobei die Summe der vorliegenden Bestandteile 100 Gew.-% beträgt, und welche zwischen einer ersten siliziumreichen Schicht (Si1) und einer zweiten siliziumreichen Schicht (Si2) liegt,
   - eine zweite siliziumreiche Schicht (Si2), welche neben unvermeidbaren Verunreinigungen mehr als 4 und bis zu 8 Gew.-% Si, 40 - 70 Gew.-% Fe, bis zu 1 Gew.-% Mn und 20 - 50 Gew.-% Aluminium enthält, wobei die Summe der vorliegenden Bestandteile 100 Gew.-% beträgt, und welche zwischen der ersten siliziumarmen Schicht (A) und der zweiten siliziumarmen Schicht (B) liegt,
   - eine zweite siliziumarme Schicht (B), welche neben unvermeidbaren Verunreinigungen 0,5 - 4 Gew.-% Si, 40 - 97 Gew.-% Fe, 0,5 -1,5 Gew.-% Mn und 2 - 40 Gew.-% Aluminium enthält, wobei die Summe der vorliegenden Bestandteile 100 Gew.-% beträgt, und welche an das Stahlsubstrat grenzt,

   wobei der Quotient X aus der Dicke (dB) der zweiten siliziumarmen Schicht (B) in $\mu$m durch die Dicke (dA) der ersten siliziumarmen Schicht (A) in $\mu$m mindestens 0,4 und höchstens 1,1 beträgt.

12. Stahlbauteil nach Anspruch 11, **dadurch gekennzeichnet, dass** das Stahlsubstrat aus einem Stahlwerkstoff mit 0,10- 0,25 Gew.-% C, 1,0 - 1,4 Gew.-% Mn, 0,35 - 0,4 Gew.-% Si, bis zu 0,03 Gew.-% P, bis zu 0,01 Gew.-% S, bis zu 0,040 Gew.-% Al, bis zu 0,15 Gew.-% Ti, bis zu 0,1 Gew.-% Nb, bis zu 0,005 Gew.-% B, bis zu 0,5 Gew.-% Cr, bis zu 0,5 Gew.-% Mo, wobei die Summe der Gehalte an Cr und Mo höchstens 0,5 Gew.-% beträgt, Rest Eisen und unvermeidbare Verunreinigungen besteht.

13. Stahlbauteil nach Anspruch 11 oder 12, **dadurch gekennzeichnet, dass** X mindestens 0,45 und höchstens 0,9 beträgt.

14. Stahlbauteil nach einem der Ansprüche 11 bis 13, **dadurch gekennzeichnet, dass** der Si-Gehalt der ersten siliziumreichen Schicht (Si1) und/oder der zweiten siliziumreichen Schicht (Si2) 5 - 8 Gew.-% beträgt.

15. Stahlbauteil nach einem der Ansprüche 11 bis 14, **dadurch gekennzeichnet, dass** der Fe-Gehalt der ersten siliziumreichen Schicht (Si1) und der Fe-Gehalt der zweiten siliziumreichen Schicht (Si2) jeweils größer als der Fe-Gehalt der ersten siliziumarmen Schicht (A) ist.

**Claims**

1. Method for producing a steel component coated with an anticorrosion coating, comprising the following operating steps:

a) providing a flat steel product coated with an aluminum-based anticorrosion coating,

b) heat-treating a blank formed from the coated flat steel product, in a furnace, where:

$$0.0034°C/min \leq Q \leq 0.021°C/min$$

with $Q = (T * d)/(t * L)$, where

T = furnace temperature in °C,

d = blank thickness in mm,

t = dwell time of the blank in the furnace in min,

L = furnace length in mm

c) shaping the blank in a shaping tool to form a steel component.

2. Method according to Claim 1, **characterized in that** the temperature T of the furnace is at least 830°C and at most 980°C.

3. Method according to Claim 1 or 2, **characterized in that** the blank is moved through the furnace during operating step b) with an average velocity (vP) of at least 1.5 m/min and at most 25 m/min.

4. Method according to any of the preceding claims, **characterized in that** the dwell time t of the blank in the furnace is at least 1 min and at most 18 min.

5. Method according to any of the preceding claims, **characterized in that** the aluminum-based anticorrosion coating contains 3-15 wt% of silicon, up to 3.5 wt% of iron, the balance being aluminum and unavoidable impurities.

6. Method according to any of the preceding claims, **characterized in that** the Si content of the aluminum-based anticorrosion coating is 7-12 wt%.

7. Method according to any of the preceding claims, **characterized in that** the Si content of the aluminum-based anticorrosion coating is 9-10 wt%.

8. Method according to any of the preceding claims, **characterized in that** the Fe content of the aluminum-based anticorrosion coating is 1-3.5 wt%.

9. Method according to any of the preceding claims, **characterized in that** the Fe content of the aluminum-based anticorrosion coating is 2-3.5 wt%.

10. Method according to any of the preceding claims, **characterized in that** the blank is cooled in operating step c) in the forming tool at a cooling rate (CR) of at least 20 K/s and at most 1000 K/s.

11. Steel component comprising a steel substrate and, at least on one side of the steel substrate, an anticorrosion coating, **characterized in that** the anticorrosion coating at least comprises:

- a first silicon-rich layer (Si1) which besides unavoidable impurities contains more than 4 and up to 8 wt% of Si, 40-70 wt% of Fe, up to 1 wt% of Mn and 30-60 wt% of aluminum, the sum of the constituents present being 100 wt%, and which is located above the first low-silicon layer (A),

- a first low-silicon layer (A) which besides unavoidable impurities contains 1-4 wt% of Si, 30-60 wt% of Fe, up to 1 wt% of Mn and 40-60 wt% of aluminum, the sum of the constituents present being 100 wt%, and which is located between a first silicon-rich layer (Si1) and a second silicon-rich layer (Si2),

- a second silicon-rich layer (Si2) which besides unavoidable impurities contains more than 4 and up to 8 wt% of Si, 40-70 wt% of Fe, up to 1 wt% of Mn and 20-50 wt% of aluminum, the sum of the constituents present being 100 wt%, and which is located between the first low-silicon layer (A) and the second low-silicon layer (B),

- a second low-silicon layer (B) which besides unavoidable impurities contains 0.5-4 wt% of Si, 40-97 wt% of Fe, 0.5-1.5 wt% of Mn and 2-40 wt% of aluminum, the sum of the constituents present being 100 wt%, and which borders the steel substrate,

where the quotient X formed from the thickness (dB) of the second low-silicon layer (B) in $\mu$m by the thickness (dA) of the first low-silicon layer (A) in $\mu$m is at least 0.4 and at most 1.1.

12. Steel component according to Claim 11, **characterized in that** the steel substrate consists of a steel material with 0.10-0.25 wt% of C, 1.0-1.4 wt% of Mn, 0.35-0.4 wt% of Si, up to 0.03 wt% of P, up to 0.01 wt% of S, up to 0.040 wt% of Al, up to 0.15 wt% of Ti, up to 0.1 wt% of Nb, up to 0.005 wt% of B, up to 0.5 wt% of Cr, up to 0.5 wt% of Mo, the sum of the amounts of Cr and Mo being at most 0.5 wt%, the balance being iron and unavoidable impurities.

13. Steel component according to Claim 11 or 12, **characterized in that** X is at least 0.45 and at most 0.9.

14. Steel component according to any of Claims 11 to 13, **characterized in that** the Si content of the first silicon-rich layer (Si1) and/or of the second silicon-rich layer (Si2) is 5-8 wt%.

15. Steel component according to any of Claims 11 to 14, **characterized in that** the Fe content of the first silicon-rich layer (Si1) and the Fe content of the second silicon-rich layer (Si2) is in each case greater than the Fe content of the first low-silicon layer (A).

## Revendications

1. Procédé pour la préparation d'un élément en acier revêtu par un revêtement anticorrosion, comprenant les étapes de travail suivantes :

   a) mise à disposition d'un produit plat en acier revêtu par un revêtement anticorrosion à base d'aluminium,
   b) traitement à la chaleur, dans un four, d'une platine formée à partir du produit plat en acier revêtu, ceci s'appliquant :

$$0{,}0034 \; °C/min \leq Q \leq 0{,}021 \; °C/min$$

   avec

$$Q = (T * d)/(t * L),$$

   T = température du four en °C,
   d = épaisseur de la platine en mm,
   t = temps de séjour de la platine dans le four en min,
   L = longueur du four en mm

   c) déformation de la platine dans un outil de déformation pour donner un élément en acier.

2. Procédé selon la revendication 1, **caractérisé en ce que** la température T du four est d'au moins 830 °C et d'au plus 980 °C.

3. Procédé selon la revendication 1 ou 2, **caractérisé en ce que** la platine est déplacée à travers le four, pendant l'étape de travail b), avec une vitesse moyenne (vP) d'au moins 1,5 m/min et d'au plus 25 m/min.

4. Procédé selon l'une quelconque des revendications précédentes, **caractérisé en ce que** le temps de séjour t de la platine dans le four est d'au moins 1 min et d'au plus 18 min.

5. Procédé selon l'une quelconque des revendications précédentes, **caractérisé en ce que** le revêtement anticorrosion à base d'aluminium contient 3 à 15 % en poids de silicium, jusqu'à 3,5 % en poids de fer, le reste étant de l'aluminium et des impuretés inévitables.

6. Procédé selon l'une quelconque des revendications précédentes, **caractérisé en ce que** la teneur en Si du revêtement anticorrosion à base d'aluminium est de 7 à 12 % en poids.

7. Procédé selon l'une quelconque des revendications précédentes, **caractérisé en ce que** la teneur en Si du revêtement anticorrosion à base d'aluminium est de 9 à 10 % en poids.

8. Procédé selon l'une quelconque des revendications précédentes, **caractérisé en ce que** la teneur en Fe du revêtement anticorrosion à base d'aluminium est de 1 à 3,5 % en poids.

9. Procédé selon l'une quelconque des revendications précédentes, **caractérisé en ce que** la teneur en Fe du revêtement anticorrosion à base d'aluminium est de 2 à 3,5 % en poids.

10. Procédé selon l'une quelconque des revendications précédentes, **caractérisé en ce que** la platine dans l'étape de travail c) est refroidie dans l'outil de formage avec une vitesse de refroidissement (CR) d'au moins 20 K/s et d'au plus 1 000 K/s.

11. Élément en acier comprenant un substrat en acier et un revêtement anticorrosion présent au moins sur un côté du substrat en acier, **caractérisé en ce que** le revêtement anticorrosion comprend au moins :

   - une première couche riche en silicium (Si1), qui contient, outre des impuretés inévitables, plus de 4 et jusqu'à 8 % en poids de Si, 40 à 70 % en poids de Fe, jusqu'à 1 % en poids de Mn et 30 à 60 % en poids d'aluminium, la somme des ingrédients présents étant de 100 % en poids, et qui se situe au-dessus de la première couche pauvre en silicium (A),
   - une première couche pauvre en silicium (A), qui contient, outre des impuretés inévitables, 1 à 4 % en poids de Si, 30 à 60 % en poids de Fe, jusqu'à 1 % en poids de Mn et 40 à 60 % en poids d'aluminium, la somme des ingrédients présents étant de 100 % en poids, et qui se situe entre une première couche riche en silicium (Si1) et une deuxième couche riche en silicium (Si2),
   - une deuxième couche riche en silicium (Si2), qui contient, outre des impuretés inévitables, plus de 4 et jusqu'à 8 % en poids de Si, 40 à 70 % en poids de Fe, jusqu'à 1 % en poids de Mn et 20 à 50 % en poids d'aluminium, la somme des ingrédients présents étant de 100 % en poids, et qui se situe entre la première couche pauvre en silicium (A) et la deuxième couche pauvre en silicium (B),
   - une deuxième couche pauvre en silicium (B), qui contient, outre des impuretés inévitables, 0,5 à 4 % en poids de Si, 40 à 97 % en poids de Fe, 0,5 à 1,5 % en poids de Mn et 2 à 40 % en poids d'aluminium, la somme des ingrédients présents étant de 100 % en poids, et qui est adjacente au substrat en acier,

   le quotient X de l'épaisseur (dB) de la deuxième couche pauvre en silicium (B) en $\mu$m sur l'épaisseur (dA) de la première couche pauvre en silicium (A) en $\mu$m étant d'au moins 0,4 et d'au plus 1,1.

12. Élément en acier selon la revendication 11, **caractérisé en ce que** le substrat en acier est constitué d'un matériau en acier doté de 0,10 à 0,25 % en poids de C, 1,0 à 1,4 % en poids de Mn, 0,35 à 0,4 % en poids de Si, jusqu'à 0,03 % en poids de P, jusqu'à 0,01 % en poids de S, jusqu'à 0,040 % en poids d'Al, jusqu'à 0,15 % en poids de Ti, jusqu'à 0,1 % en poids de Nb, jusqu'à 0,005 % en poids de B, jusqu'à 0,5 % en poids de Cr, jusqu'à 0,5 % en poids de Mo, la somme des teneurs en Cr et en Mo étant d'au plus 0,5 % en poids, le reste étant du fer et des impuretés inévitables.

13. Élément en acier selon la revendication 11 ou 12, **caractérisé en ce que** X est d'au moins 0,45 et d'au plus 0,9.

14. Élément en acier selon l'une quelconque des revendications 11 à 13, **caractérisé en ce que** la teneur en Si de la première couche riche en silicium (Si1) et/ou de la deuxième couche riche en silicium (Si2) est de 5 à 8 % en poids.

15. Élément en acier selon l'une quelconque des revendications 11 à 14, **caractérisé en ce que** la teneur en Fe de la première couche riche en silicium (Si1) et la teneur en Fe de la deuxième couche riche en silicium (Si2) est à chaque fois supérieure à la teneur en Fe de la première couche pauvre en silicium (A).

Ox
Si1
K
A
Si2
B
S

Fig. 1

Ox
C
Si1
K
A
Si2
B
S

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008053273 A1
- EP 2993248 A1